# EUROPÄISCHE PATENTSCHRIFT

(11) **EP 0 824 391 B1**
(45) Veröffentlichungstag und Bekanntmachung des Hinweises auf die Patenterteilung: **17.10.2001**
(21) Anmeldenummer: 96919673.2
(22) Anmeldetag: 05.05.1996
(51) Int. Cl.: B23K 9/167, B23K 9/29

(54) **GASLINSENGEHÄUSE FÜR LICHTBOGENSCHWEISS- ODER -SCHNEIDBRENNER MIT NICHT ABSCHMELZENDER ELEKTRODE**
GAS LENS HOUSING FOR ARC-WELDING OR FLAME CUTTERS WITH NON-MELTING ELECTRODES
BOITIER DE LENTILLE DE GAZ POUR CHALUMEAUX SOUDEURS A L'ARC OU COUPEURS A ELECTRODE NON FUSIBLE

(30) Priorität: 05.05.1995 DE 19516110; 12.10.1995 DE 19537988
(43) Veröffentlichungstag der Anmeldung: 25.02.1998
(73) Patentinhaber: ALEXANDER BINZEL GmbH & Co. KG, D-35418 Buseck (DE)
(72) Erfinder: SPERLING, Hermann, D-55296 Gau-Bischofsheim (DE)
(74) Vertreter: Müller, Eckhard, Dr.
(86) Internationale Anmeldenummer: EP9601871
(87) Internationale Veröffentlichungsnummer: WO9634716

(56) Entgegenhaltungen:
- DE-A- 4 314 099
- GB-A- 1 451 913

## Beschreibung

Die Erfindung betrifft einen Lichtbogenschweiß- oder - schneidbrenner, insbesondere WIG-Brenner, mit einem Brennerkörper mit einem Gehäuse zur Aufnahme eines Elektrodenhalters, welcher ggf. in einem vorderen stromabwärtigen Abschnitt Spannzangen mit Dehnschlitzen für die klemmende Festlegung der Elektrode aufweist, wobei zwischen dem Elektrodenhalter und einem Gehäusemantel des Gehäuses ein als Schutzgaskanal dienender Ringkanal ausgebildet und in dem Ringkanal eine Gaslinse angeordnet ist (siehe DE-A-4 314 099).

Derartige Gaslinsengehäuse bzw. Gaslinsen werden am Ausgang des Schutzgaskanals eines Lichtbogenschweiß- oder - schneidbrenners angeordnet, damit das Schutzgas möglichst laminar aus dem Brenner austritt, die Elektrode umgibt bzw. einhüllt und in diesem Zustand ohne Durchmischung von Umgebungsluft die Schweißstelle erreicht. Die Gaslinsen können bspw. aus sintermetallplättchen, wie dies bspw. in der DE-GM 84 05 922 beschrieben ist, oder auch aus gepreßter Metallwolle bzw. metallischem Drahtsiebgewebe bestehen.

Die Gaslinsen sind bei den Brennern der eingangs genannten Art innerhalb eines Gaslinsengehäuses befestigt, indem bspw. das Sintermetallplättchen oder feinmaschige Siebe mittels eines Sprengringes auf dem Führungsrohr gesichert ist, wie dies in der DE-AS 1 295 328 beschrieben ist. Auch besteht die Möglichkeit, das Sintermetallplättchen durch Anstauchen des äußeren Endes auf dem Führungsrohr zu befestigen. Eine derartige Anordnung ist bspw. in der DE 37 28 185 A1 beschrieben.

Weiterhin ist es bereits bekannt, die Gaslinsengehäuse an das Spannhülsengehäuse des Brenners anzuschrauben oder anzulöten.

In der GB 1451913 A ist ein Schweißbrenner offenbart, dessen Brennerkopf sehr kompakt ausgebildet werden soll. Hierzu weist der Brennerkopf einen kupfernen Ringkörper sowie einen Ringkörper aus PTFE auf, der seinerseits eine keramische Hülse mit einer zentrischen Durchbrechung für die Elektrode und den Austritt des Schutzgases trägt. In einer Ausnehmung des Ringkörpers ist ein Ringeinsatz eingesetzt, der eine zentrische Durchbrechung für die Elektrode besitzt und an dessen stromabwärtigen Ende eine Hülse sitzt, die zusammen mit einem Ring, der in dem Ringkörper angeordnet ist, das Gehäuse für eine Gaslinse bildet. Zwischen diesem Ring und der Hülse sind mehrere Lagen eines Metallgewebes eingelegt. Die Gaslinse, der Ring und die Hülse bilden einen kassettenähnlichen Körper, der durch den nach innen gerichteten Flansch des Ringkörpers auf dem kopfseitigen Ansatz des Ringansatzes gehalten wird. Die Elektrode erstreckt sich durch den Ringansatz und ist mittels eines kragenartigen Teils, welches rückseitig in den Ringansatz eingeschraubt wird, befestigt.

Aus der DE 43 14 099 A1 ist ein Lichtbogenschweiß- oder - schneidbrenner bekannt, bei dem eine Elektrode in einem Elektrodenhalter eingespannt ist, der seinerseits in einem Gehäuse des Brennerkörpers aufgenommen ist. Am vorderen Ende des Brennerkörpers ist eine Brennerdüse beziehungsweise eine Gasdüse gehalten.

In der Regel weist die Gaslinse eine zentrische Bohrung auf, welche über das vordere Ende des Spannhülsengehäuses bzw. der Spannzange des Elektrodenhalters geschoben wird. Als nachteilig hat sich bei dieser bekannten Anordnung herausgestellt, daß bspw. dann, wenn sich Spritzer bzw. Kugeln des Schweißgutes an dem vorderen Ende der Elektrode gebildet haben, bei einem Wechsel der Gasdüse die Gaslinse bzw. Teile davon an den Spritzern bzw. Kugeln der Elektrode hängenbleiben, wodurch die Gefahr einer Beschädigung der Gaslinse bzw. Gasdüse hervorgerufen wird.

Demgegenüber liegt der Erfindung die Aufgabe zugrunde, den Brenner der eingangs genannten Art dahingehend weiterzubilden, daß ein problemloser Wechsel der Gasdüse ermöglicht ist. Gemäß einem Nebenaspekt der Erfindung soll eine optimale Schutzgasatmosphäre im Bereich der Elektrode geschaffen werden.

Diese Aufgabe wird nach der Erfindung i. w. dadurch gelöst, daß die Gaslinse in einem Gaslinsengehäuse gehalten ist, und daß das Gaslinsengehäuse an einem vorderen Ende des Elektrodenhalters mit radialem und ggf.mit axialem Spiel gehalten ist.

Aufgrund dieser Maßnahme ist es möglich, die sich beim Festziehen in radialer Richtung zusammenziehende Spannzange des Elektrodenhalters sicher zu fixieren, wobei dennoch das Gaslinsengehäuse an dem Elektrodenhalter sicher gehalten ist. Haben sich während des Schweißens Spritzer oder Kugeln des Schweißgutes an dem vorderen Ende der Elektrode abgesetzt, ist lediglich eine Brennerkappe des Brennkörpers zu lösen, wodurch auch die klemmende Halterung der Elektrode durch die Spannzangen gelöst wird, so daß die Elektrode ohne weiteres aus dem Elektrodenhalter entfernbar ist. Dadurch, daß die Elektrode einfach aus dem vorderen, stromabwärtigen Abschnitt des Elektrodenhalters bei gelösten Spannzangen herausziehbar ist, ist die Gefahr einer Beschädigung der Gaslinse sicher vermieden. Weiterhin führt die erfindungsgemäße Halterung des Gaslinsengehäuses an dem vorderen Ende des Elektrodenhalters nicht zu einer Beeinträchtigung der Funktion der Spannzangen zur Festlegung der Elektrode.

Nach einer vorteilhaften Weiterbildung der Erfindung ist das Gaslinsengehäuse um eine Längsachse des Elektrodenhalters drehbar und ggf. mit geringem axialem Spiel an dem Elektrodenhalter gehalten. Hierdurch wird eine exakte Ausrichtung und Fixierung der sich beim Festklemmen der Elektrode insbesondere in radialer Richtung bewegenden Spannzangen gewährleistet, obwohl diese Spannzangen zusätzlich die Funktion der Halterung des Gaslinsengehäuses übernehmen.

Nach einer vorteilhaften Ausgestaltung der Erfindung weisen der Elektrodenhalter bzw. die Spannzangen am vorderen Ende radial nach außen gerichtete Ansätze nach Art eines Ringflansches auf, wobei der Elektrodenhalter durch eine zentrale Bohrung im Boden eines topfförmigen Außenteils des Gaslinsengehäuses gesteckt ist, so daß das Außenteil nach Art eines Überwurfs drehbar an dem vorderen Ende des Elektrodenhalters angeordnet ist. Die nach außen gerichteten Ansätze am vorderen Ende des Elektrodenhalters wirken somit als Haltearme zur Halterung des Außenteils des Gaslinsengehäuses.

Zur Festlegung des Gaslinsengehäuses an dem Elektrodenhalter ist es vorgesehen, daß in die topfförmige Aufnahme des Außenteils ein vom Schutzgas durchströmbares Halteelement eingesetzt und mit dem Außenteil, bspw. durch Verrastung, Verstemmung, Stauchung o. dgl., fest verbunden ist, wobei die nach außen gerichteten Ansätze mit Spiel zwischen dem Boden des Außenteils und dem Halteelement aufgenommen sind. Aufgrund dieser vorteilhaften Ausgestaltung ist das Gaslinsengehäuse bzw. ein Außenteil des Gaslinsengehäuses sicher und mit Spiel an dem Elektrodenhalter gehalten.

Dabei weisen die radial nach außen gerichteten Ansätze eine solche radiale Länge auf, die den maximalen Hub der Spannzangen des Elektrodenhalters beim Festlegen der Elektrode im Gehäuse übersteigt. Somit ist auch dann für eine sichere, mit Spiel ausgestattete Halterung des Gaslinsengehäuses an dem Elektrodenhalter gesorgt, wenn die Spannzangen des Elektrodenhalters beim Festziehen radial nach innen in Richtung einer Mittel-Längsachse des Elektrodenhalters bewegt werden.

Als Halteelement ist nach einer vorteilhaften Ausführungsform der Erfindung eine Lochscheibe mit mehreren vom Schutzgas durchströmbaren Löchern vorgesehen, die eine zentrische Durchbrechung zur Durchführung der Elektrode aufweist.

Es besteht jedoch nach einer weiteren vorteilhaften und eigenständigen Ausgestaltung der Erfindung die Möglichkeit, das Halteelement als Flügelrad, Rotor o. dgl. auszubilden, so daß das Halteelement zusammen mit dem Außenteil unter der Wirkung des durchströmenden Schutzgases in eine Rotation um die Längsachse des Elektrodenhalters versetzbar ist. Aufgrund dieser Ausgestaltung wird das Schutzgas mit einem Drall beaufschlagt und aus der Gaslinse ausgetragen, was sich als besonders günstig für die Stabilisierung des Lichtbogens erwiesen hat. Insbesondere wird aufgrund dieser Maßnahme ein Wandern des Lichtbogens vermieden.

Es versteht sich bei der letztgenannten Ausgestaltung, daß das Gaslinsengehäuse auch bei in dem Gehäuse des Brennerkörpers mitsamt Elektrode eingespannten Elektrodenhalter frei drehbar um die Längsachse an dem Elektrodenhalter angeordnet ist.

Eine vorteilhafte Ausgestaltung der Erfindung besteht darin, daß das Halteelement mittels einer ersten Ringstufe, Ringnut o. dgl. in der Seiteninnenwand des Außenteils fixiert ist.

Um eine weitere Vergleichmäßigung des aus der Gaslinse austretenden Schutzgasvolumenstroms über die gesamte Fläche der Gaslinse zu erreichen, ist stromabwärts der ersten Ringstufe in der Seiteninnenwand des Außenteils eine zweite Ringstufe, Ringnut o. dgl. angeordnet, in der ein oder mehrere Siebe einrastbar bzw. fixierbar sind.

Es hat sich darüber hinaus auch als vorteilhaft erwiesen, daß das oder die Siebe mit einer zentralen Bohrung in einer Ringnut o. dgl. eines Hülsenabschnitts des Halteelements einrastbar bzw. fixierbar sind. Hierdurch werden die an und für sich recht flexiblen Siebe in dem Gaslinsengehäuse sicher und dauerhaft gehalten.

Weitere Vorteile und Anwendungsmöglichkeiten der vorliegenden Erfindung ergeben sich aus der nachfolgenden Beschreibung eines Ausführungsbeispieles anhand der Zeichnung.

Es zeigen:
- Figur 1: einen WIG-Brenner mit einem Spannzangen aufweisenden Elektrodenhalter und daran mit Spiel angeordneter Gaslinse,
- Figur 2: den Elektrodenhalter mit daran angeordneter Gaslinse gemäß Figur 1,
- Figur 3: den Elektrodenhalter gemäß den Figuren 1 und 2 in Schnittdarstellung,
- Figur 4: das als Lochscheibe ausgebildete Halteelement in einer Draufsicht,
- Figur 5: das Halteelement gemäß Figur 4 in Seitenansicht, teilweise geschnitten und in vergrößertem Maßstab dargestellt und
- Figur 6: ein Sieb der Gaslinse.

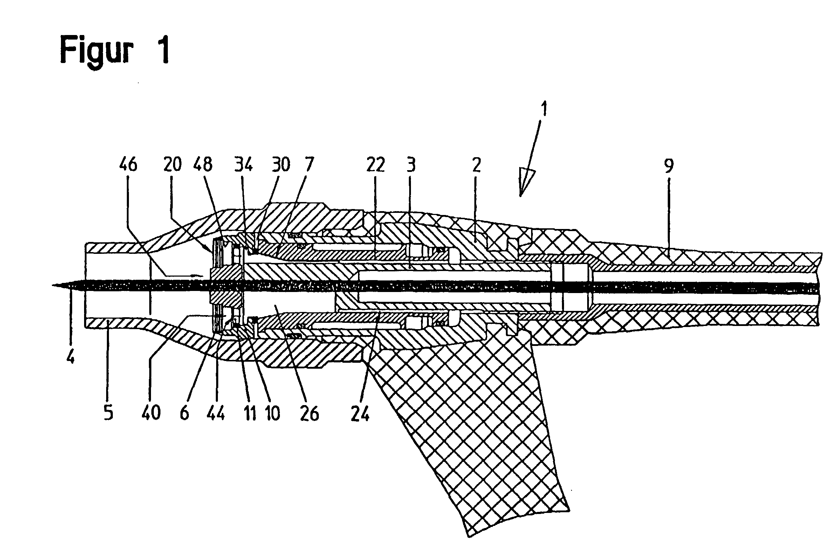

Der Lichtbogenschweiß oder -schneidbrenner gemäß Figur 1 ist als luftgekühlter WIG-Brenner ausgebildet und weist einen Brennerkörper 1 mit einem Gehäuse 2 zur Aufnahme eines Elektrodenhalters 3 auf. Dabei ist in dem Elektrodenhalter 3 eine Elektrode 4 eingespannt. Am vorderen Ende des Brennerkörpers 1 ist eine Brennerdüse 5 angeordnet, wobei zur besseren Verteilung des aus der Brennerdüse 5 austretenden Schutzgases innerhalb der Brennerdüse 5 eine Gaslinse 6 vorgesehen ist. Mit Hilfe der Gaslinse 6, die in einem Gaslinsengehäuse 20 gehalten ist, soll ein laminarer Schutzgasstrom erzeugt und ein besseres Abdecken der Schweißstelle gewährleistet werden. Das Schutzgas wird der Gaslinse über einen Ringkanal 24 zugeführt, der zwischen einem Gehäusemantel 22 des Gehäuses 2 und dem Elektrodenhalter 3 gebildet ist. Die Gaslinse 6 bzw. das Gaslinsengehäuse 20 sind in dem Ringkanal 24 bzw. in der Brennerdüse 5 angeordnet.

Das Gehäuse 2 des Brennerkörpers 1 weist einen konischen Sitz 7 für den Elektrodenhalter 3 auf. Bei der Montage wird eine Brennerkappe 9 auf das hintere Ende des Elektrodenhalters 3 aufgeschraubt, wobei der Elektrodenhalter 3 in den konusförmigen Sitz 7 eingezogen wird. Hierbei ziehen sich die Spannzangen 28 bzw. Dehnschlitze 8 des Elektrodenhalters 3 bevorzugt radial nach innen zusammen, wodurch die Elektrode 4 innerhalb des Elektrodenhalters 3 festgeklemmt wird.

Die Spannzangen 28 mit Dehnschlitzen 8 sind nach dem Ausführungsbeispiel an einem vorderen, stromabwärtigen Abschnitt 26 des Elektrodenhalters 3 angeordnet. Das Gaslinsengehäuse 20 ist dabei an einem vorderen Ende 30 des Elektrodenhalters 3 mit Spiel gegenüber dem Elektrodenhalter 3 gehalten. Somit ist es möglich, eine exakte Ausrichtung und Fixierung der sich beim Festziehen radial nach innen bewegenden Spannzangen 3 zu erreichen.

Das Gaslinsengehäuse 20 ist dabei an dem Elektrodenhalter 3 um eine Längsachse 32 des Elektrodenhalters 3 drehbar und ggf. mit geringem axialen Spiel gehalten. Weiterhin weist das Gaslinsengehäuse 20 ein ring- oder topfförmiges Außenteil 10 auf, welches eine zentrale Bohrung 36 in einem Boden 38 besitzt. Durch diese zentrale Bohrung 36 ist der Elektrodenhalter 3 hindurchgesteckt, wobei an dem Elektrodenhalter 3 bzw. den Spannzangen 28 am vorderen Ende 30 radial nach außen gerichtete Ansätze 34 nach Art eines Ringflansches gebildet sind, die den Boden 38 übergreifen. Insgesamt ist das Außenteil 10 nach Art eines Überwurfs drehbar an dem vorderen Ende 30 des Elektrodenhalters 3 angeordnet.

In die zur Brennerdüse 5 hin offene Aufnahme 40 des Außenteils 10 ist ein vom Schutzgas durchströmbares Halteelement 42 eingesetzt und mit dem Außenteil 10, bspw. durch Verrastung, Verstemmung, Stauchung o. dgl., fest verbunden. Die nach außen gerichteten Ansätze 34 des Elektrodenhalters 3 sind dabei zwischen dem Boden 38 des Außenteils 10 und dem Halteelement 42 aufgenommen.

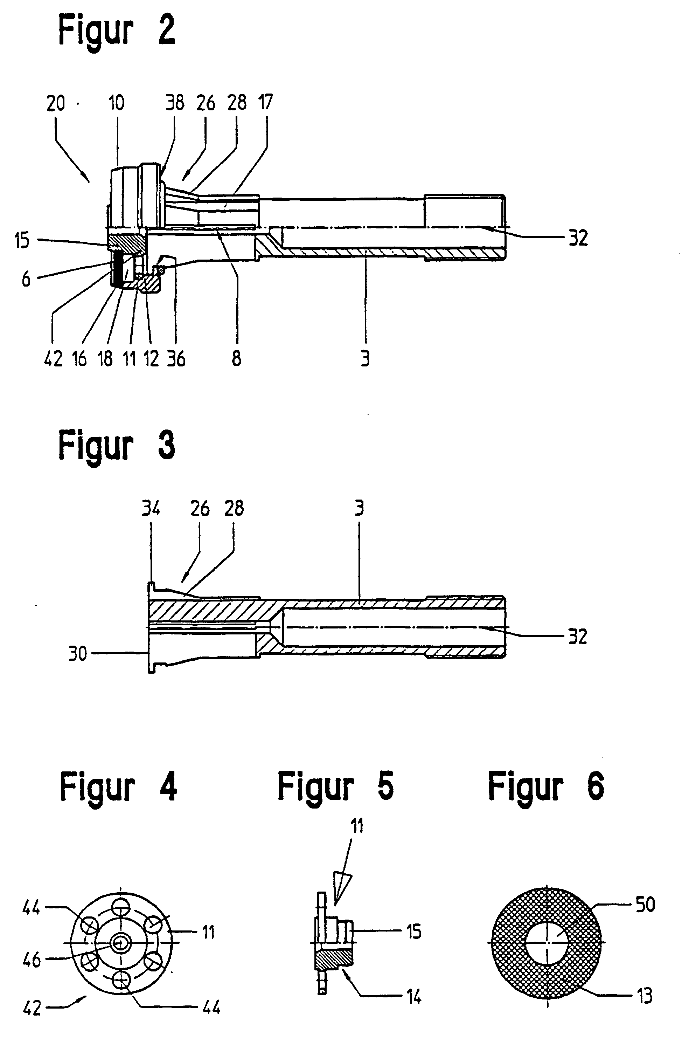

Das Halteelement 42 ist gemäß dem Ausführungsbeispiel insbesondere der Figur 4 als Lochscheibe 11 ausgebildet, wobei die Lochscheibe 11 mehrere vom Schutzgas durchströmbare Löcher 44 sowie eine zentrische Durchbrechung 46 zur Durchführung der Elektrode 4 besitzt. Das Halteelement 42 bzw. die Lochscheibe 11 sind mittels einer ersten Ringstufe 12, Ringnut o. dgl. in der Seiteninnenwand 48 des Außenteils 10 an dem Außenteil 10 fixierbar.

Es versteht sich, daß die radial nach außen gerichteten Ansätze 34 eine solche radiale Länge aufweisen, die den maximalen Hub der Spannzangen 28 des Elektrodenhalter 3 beim Festklemmen der Elektrode 4 im Gehäuse 2 übersteigt. Somit ist gewährleistet, daß das Gaslinsengehäuse 20 auch bei nach radial innen zur Mittel-Längsachse 32 des Elektrodenhalters 3 geschwenkten Spannzangen 28 sicher am Elektrodenhalter 3 befestigt ist.

Nach einer anderen Ausführungsform kann das Halteelement 42 auch als Flügelrad, Rotor o. dgl. ausgebildet sein und ist unter der Wirkung des durchströmenden Schutzgases zusammen mit dem Außenteil 10 in eine Rotation um die Längsachse 32 des Elektrodenhalters 3 versetzbar. Dabei ist es von Vorteil, daß das Gaslinsengehäuse 20 bei in dem Gehäuse 2 des Brennerkörpers 1 mitsamt Elektrode 4 eingespanntem Elektrodenhalter 3 frei drehbar um die Längsachse 32 an dem Elektrodenhalter 3 angeordnet ist.

Nachdem bei der Montage des Gaslinsengehäuses 20 das Halteelement 42 auf die erste Ringstufe 12 aufgesetzt und bspw. durch Stauchung oder Verstemmung an dem Gaslinsengehäuse 20 befestigt ist, werden ein oder mehrere Siebe 13 mit einer zentralen Bohrung 50 in einer Ringnut 14 an einem Hülsenabschnitt 15 des Halteelements 42 bzw. der Lochscheibe 11 eingerastet oder fixiert. Dabei rastet der Außenrand der Siebe 13 in einer zweiten Ringstufe 16, bspw. einer Ringnut in der Seiteninnenwand 48 des Außenteils 10 ein.

Diese Siebe 13 dienen der Vergleichmäßigung des Schutzgasvolumenstroms über die gesamte Fläche der Gaslinse. Auch der zwischen dem Halteelement 42 bzw. der Lochscheibe 11 und den Sieben 13 gebildete Stauraum 18 sorgt zusätzlich dafür, daß das durch die Lochscheibe 11 hindurchtretende Schutzgas gleichmäßig und homogen auf das Sieb 13 der Gaslinse 6 auftrifft.

Es bleibt anzumerken, daß die Lochscheibe 11 mit dem Hülsenabschnitt 15 als einstückiges Drehteil ausgebildet sein kann. Gleiches gilt auch für das Außenteil 10, so daß sich insgesamt ein konstruktiv äußerst einfacher Aufbau des Gaslinsengehäuses 20 ergibt.

Nach dem beschriebenen Ausführungsbeispiel sind an dem Elektrodenhalter 3 über den Umfang verteilt angeordnete Längskanäle 17 für die Zufuhr des Schutzgases zu der Gaslinse 6 angeordnet. Natürlich besteht auch die Möglichkeit, daß im Bereich des Bodens 38 des Außenteils 10 entsprechende Öffnungen für den Durchtritt des Schutzgases in das Gaslinsengehäuse angeordnet sind.

### Bezugszeichenliste

- 1 -: Brennerkörper
- 2 -: Gehäuse
- 3 -: Elektrodenhalter
- 4 -: Elektrode
- 5 -: Brennerdüse
- 6 -: Gaslinse
- 7 -: Sitz
- 8 -: Dehnschlitz
- 9 -: Brennerkappe
- 10 -: Außenteil
- 11 -: Lochscheibe
- 12 -: erste Ringstufe
- 13 -: Sieb
- 14 -: Ringnut
- 15 -: Hülsenabschnitt
- 16 -: zweite Ringstufe
- 17 -: Längskanal
- 18 -: Stauraum
- 20 -: Gaslinsengehäuse
- 22 -: Gehäusemantel
- 24 -: Ringkanal
- 26 -: vorderer Abschnitt
- 28 -: Spannzange
- 30 -: vorderes Ende
- 32 -: Längsachse
- 34 -: Ansatz
- 36 -: Bohrung
- 38 -: Boden
- 40 -: Aufnahme
- 42 -: Halteelement
- 44 -: Loch
- 46 -: Durchbrechung
- 48 -: Seiteninnenwand
- 50 -: Bohrung

## Patentansprüche

1. Lichtbogenschweiß- oder -schneidbrenner mit nicht abschmelzender Elektrode (4), insbesondere WIG-Brenner, mit einem Brennerkörper (1) mit einem Gehäuse (2) zur Aufnahme eines Elektrodenhalters (3), welcher in einem vorderen, stromabwärtigen Abschnitt (26) Spannzangen (28) mit Dehnschlitzen (8) für die klemmende Festlegung der Elektrode (4) aufweist, wobei zwischen dem Elektrodenhalter (3) und einem Gehäusemantel (22) des Gehäuses ein als Schutzgaskanal dienender Ringkanal (24) ausgebildet und in dem Ringkanal (24) bzw. der Brennerdüse (5) eine Gaslinse (6) angeordnet ist, **dadurch gekennzeichnet, daß** die Gaslinse (6) in einem Gaslinsengehäuse (20) gehalten ist, und daß das Gaslinsengehäuse (20) an einem vorderen Ende (30) des Elektrodenhalters (3) mit radialem und gegebenenfalls mit axialem Spiel gehalten ist.

2. Brenner nach Anspruch 1, **dadurch gekennzeichnet, daß** das Gaslinsengehäuse (20) um eine Längsachse (32) des Elektrodenhalters (3) drehbar und mit geringem axialen Spiel an dem Elektrodenhalter (3) gehalten ist.

3. Brenner nach einem der vorhergehenden Ansprüche, **dadurch gekennzeichnet, daß** der Elektrodenhalter (3) bzw. die Spannzangen ( 28) am vorderen Ende (30) radial nach außen gerichtete Ansätze (34) nach Art eines Ringflansches aufweisen, der Elektrodenhalter (3) durch eine zentrale Bohrung (36) im Boden (38) eines topfförmigen Außenteils (10) des Gaslinsengehäuses (20) gesteckt ist, so daß das Außenteil (10) nach Art eines Überwurfs drehbar an dem vorderen Ende (30) des Elektrodenhalters (3) angeordnet ist.

4. Brenner nach Anspruch 3, **dadurch gekennzeichnet, daß** in die topfförmige Aufnahme (40) des Außenteils (10) ein vom Schutzgas durchströmbares Halteelement (42) eingesetzt und mit dem Außenteil (10), bspw. durch Verrastung, Verstemmung, Stauchung o. dgl., fest verbunden ist, wobei die nach außen gerichteten Ansätze (34) zwischen dem Boden (38) des Außenteils (10) und dem Halteelement (42) aufgenommen sind.

5. Brenner nach einem der Ansprüche 3 oder 4, **dadurch gekennzeichnet, daß** die radial nach außen gerichteten Ansätze (34) eine solche radiale Länge aufweisen, die den maximalen Hub der Spannzangen (28) des Elektrodenhalters (3) beim Festlegen der Elektrode (4) im Gehäuse (2) übersteigt.

6. Brenner nach einem der Ansprüche 3 bis 5, **dadurch gekennzeichnet, daß** das Halteelement (42) als Lochscheibe (11) mit mehreren vom Schutzgas durchströmbaren Löchern (44) und einer zentrischen Durchbrechung (46) zur Durchführung der Elektrode (4) ausgebildet ist.

7. Brenner nach einem der Ansprüche 3 bis 5, **dadurch gekennzeichnet, daß** das Halteelement (42) als Flügelrad, Rotor o. dgl. ausgebildet und unter der Wirkung des durchströmenden Schutzgases zusammen mit dem Außenteil (10) in eine Rotation um die Längsachse (32) des Elektrodenhalters (3) versetzbar ist.

8. Brenner nach einem der vorhergehenden Ansprüche, **dadurch gekennzeichnet, daß** das Gaslinsengehäuse (20) bei in dem Gehäuse (2) des Brennerkörpers (1) mitsamt Elektrode (4) eingespannten Elektrodenhalter (3) frei drehbar um die Längsachse (32) an dem Elektrodenhalter (3) angeordnet ist.

9. Brenner nach einem der Ansprüche 4 bis 8, **dadurch gekennzeichnet, daß** das Halteelement (42) mittels einer ersten Ringstufe (12), Ringnut o. dgl. in der Seiteninnenwand (48) des Außenteils (10) fixiert ist.

10. Brenner nach einem der Ansprüche 4 bis 9, **dadurch gekennzeichnet, daß** stromabwärts der ersten Ringstufe (12) in der Seiteninnenwand (48) des Außenteils eine zweite Ringstufe (16), Ringnut o. dgl. angeordnet ist, in der ein oder mehrere Siebe (13) einrastbar bzw. fixierbar sind.

11. Brenner nach Anspruch 10, **dadurch gekennzeichnet, daß** das Sieb bzw. die Siebe (13) mit einer zentralen Bohrung (50) in einer Ringnut (14) o. dgl. eines Hülsenabschnitts (15) des Halteelements (42) einrastbar bzw. fixierbar sind.

## Claims

1. Arc-welding or arc-cutting torch with a non-consumable electrode (4), especially a TIG torch, with a torch body (1) with a housing (2) for reception of an electrode holder (3), which has, in a front, downstream portion (26), split collets (28) with expansion slots (8) for clamped fixing of the electrode (4), wherein an annular channel (24) serving as a protective gas channel is formed between the electrode holder (3) and a housing casing (22) of the housing and a gas lens (6) is arranged in the annular channel (24) or the torch nozzle (5), **characterised in that** the gas lens (6) is retained in a gas lens housing (20) and that the gas lens housing (20) is held at a front end (30) of the electrode holder (3) with a radial play and optionally an axial play.

2. Torch according to claim 1, **characterised in that** the gas lens housing (20) is rotatable about a longitudinal axis (32) of the electrode holder (3) and is held at the electrode holder (3) with a small axial play.

3. Torch according to one of the preceding claims, **characterised in that** the electrode holder (3) or the split collets (28) has or have at the front end (30) radially outwardly directed projections (34) in the manner of an annular flange, and the electrode holder (3) is plugged through a central bore (36) in the base (38) of a pot-shaped outer part (10) of the gas lens housing (20) so that the outer part (10) is rotatably arranged at the front end (30) of the electrode holder (3) in the manner of a box nut.

4. Torch according to claim 3, **characterised in that** a retaining element (42), which can be flowed through by the protective gas, is inserted into the pot-shaped receptacle (40) of the outer part (10) and is fixedly connected with the outer part (10) by, for example, detenting, peening over, upsetting or the like, wherein the outwardly directed projections (34) are received between the base (38) of the outer part (10) and the retaining element (42).

5. Torch according to one of claims 3 and 4, **characterised in that** the radially outwardly directed projections (34) have a radial length such as to exceed the maximum stroke of the split collets (28) of the electrode holder (3) on fixing of the electrode (4) in the housing (2).

6. Torch according to one of claims 3 to 5, **characterised in that** the retaining element (42) is formed as an apertured disc (11) with several apertures (44) able to be flowed through by the protective gas and a central passage (46) for guidance through of the electrode (4).

7. Torch according to one of claims 3 to 5, **characterised in that** the retaining element (42) is constructed as an impeller, a rotor or the like and can be set into rotation, together with the outer part (10), about the longitudinal axis (32) of the electrode holder (3) under the action of the throughflowing protective gas.

8. Torch according to one of the preceding claims, **characterised in that** the gas lens housing (20) is arranged at the electrode holder (3) to be freely rotatable about the longitudinal axis (32) when the electrode holder (3) inclusive of electrode (4) is clamped in the housing (2) of the torch body (1).

9. Torch according to one of claims 4 to 8, **characterised in that** the retaining element (42) is fixed in the lateral inner wall (48) of the outer part (10) by means of a first annular step (12), annular groove or the like.

10. Torch according to one of claims 4 to 9, **characterised in that** a second annular step (16), annular groove or the like in which one or more sieves (13) can be detented or fixed is arranged in the lateral inner wall (48) of the outer part downstream of the first annular step (12).

11. Torch according to claim 10, **characterised in that** the sieve or sieves (13) can be detented or fixed by a central bore (50) in an annular groove (14) or the like of a sleeve portion (15) of the retaining element (42).

## Revendications

1. Chalumeau de soudage à l'arc ou d'électro-coupage par arc, en particulier chalumeau TIG, comprenant une électrode non fusible (4), comprenant un corps de chalumeau (1) ayant un boîtier (2) destiné à recevoir un porte-électrode (3) qui comporte, dans une partie avancée aval (26), des pinces de serrage (28) pourvues de fentes d'expansion (8) permettant l'immobilisation par serrage de l'électrode (4), un canal annulaire (24) servant de canal d'amenée de gaz protecteur étant aménagé entre le porte-électrode (3) et une enveloppe (22) du boîtier, et une lentille de gaz (6) étant disposée dans le canal annulaire (24) ou la buse de chalumeau (5),
**caractérisé en ce que** la lentille de gaz (6) est montée dans un boîtier (20) de lentille de gaz, et que le boîtier (20) de lentille de gaz est monté sur une extrémité avant (30) du porte-électrode (3) avec un jeu radial et, le cas échéant, un jeu axial.

2. Chalumeau selon la revendication 1, **caractérisé en ce que** le boîtier (20) de lentille de gaz est monté sur le porte-électrode (3) de façon à pouvoir tourner autour d'un axe longitudinal (32) du porte-électrode (3), et garde un faible jeu axial.

3. Chalumeau selon l'une des revendications précédentes, **caractérisé en ce que** le porte-électrode (3) ou les pinces de serrage (28) comportent, au niveau de l'extrémité avant (30), des prolongements (34) dirigés radialement vers l'extérieur, à la manière d'une collerette annulaire, et **en ce que** le porte-électrode (3) est engagé à travers un orifice central (36) ménagé dans le fond (38) d'un élément extérieur (10) en forme de cuvette du boîtier (20) de lentille de gaz, de manière que l'élément extérieur (10) soit monté sur l'extrémité avant (30) du porte-électrode (3) de façon rotative, à la manière d'un écrou-raccord.

4. Chalumeau selon la revendication 3, **caractérisé en ce qu'**un élément de support (42), pouvant être traversé par le gaz protecteur, est inséré dans la partie réceptrice (40) de l'élément extérieur (10) et est fermement relié à l'élément extérieur (10) par exemple par encliquetage, matage, emboutissage ou similaire, les prolongements (34) dirigés vers l'extérieur étant reçus entre le fond (38) de l'élément extérieur (10) et l'élément de support (42).

5. Chalumeau selon l'une des revendications 3 ou 4, **caractérisé en ce que** les prolongements (34) dirigés radialement vers l'extérieur présentent une longueur radiale qui dépasse la course maximale des pinces de serrage (28) du porte-électrode (3) lors du blocage de l'électrode (4) dans le boîtier (2).

6. Chalumeau selon l'une des revendications 3 à 5, **caractérisé en ce que** l'élément de support (42) est réalisé sous forme d'une rondelle perforée (11) comportant plusieurs trous (44) pouvant être traversés par le gaz protecteur, et une ouverture centrale (46) permettant le passage de l'électrode (4).

7. Chalumeau selon l'une des revendications 3 à 5, **caractérisé en ce que** l'élément de support (42) est réalisé sous forme d'une roue ailetée, d'un rotor ou similaire, et qu'il peut être mis en rotation, conjointement avec l'élément extérieur (10), autour de l'axe longitudinal (32) du porte-électrode (3), par l'action du flux de gaz protecteur qui le traverse.

8. Chalumeau selon l'une des revendications précédentes, **caractérisé en ce que** le boîtier (20) de lentille de gaz est monté sur le porte-électrode (3) de manière libre en rotation autour de l'axe longitudinal (32), lorsque l'ensemble du porte-électrode (3) et de l'électrode (4) est serré dans le boîtier (2) du corps de chalumeau (1).

9. Chalumeau selon l'une des revendications 4 à 8, **caractérisé en ce que** l'élément de support (42) est fixé au moyen d'un premier palier annulaire (12), d'une gorge annulaire, ou similaire, ménagé(s) dans la paroi latérale intérieure (48) de l'élément extérieur (10).

10. Chalumeau selon l'une des revendications 4 à 9, **caractérisé en ce qu'**en aval du premier palier annulaire (12), un/une deuxième palier annulaire (16) ou gorge annulaire ou similaire est aménagé(e) dans la paroi latérale intérieure (48) de l'élément extérieur, palier où un ou plusieurs tamis (13) peut/peuvent être enclenché(s) ou fixé(s).

11. Chalumeau selon la revendication 10, **caractérisé en ce que** le tamis ou les tamis (13) peut/peuvent être enclenché(s) ou fixé(s) dans une gorge annulaire (14) ou similaire d'une section de douille (15) de l'élément de support (42) par une ouverture centrale (50).
